# EUROPÄISCHE PATENTANMELDUNG

(11) **EP 4 300 286 A1**
(43) Veröffentlichungstag der Anmeldung: **03.01.2024**
(21) Anmeldenummer: 22181313.2
(22) Anmeldetag: 27.06.2022
(51) Int. Cl.: G06F 3/147, G05B 15/02, G06F 15/16, H04L 67/025, H04N 1/00, H02J 3/00, H02P 29/00, G01R 1/02

(54) **UMRICHTER MIT ANZEIGEEINHEIT UND VERFAHREN ZU DESSEN BETRIEB**

(71) Anmelder: Siemens Aktiengesellschaft, 80333 München (DE)
(72) Erfinder: Die Erfindernennung liegt noch nicht vor
(74) Vertreter: Siemens Patent Attorneys

(57) **Zusammenfassung**

Vorgeschlagen werden ein Umrichter (12) eines Antriebs- oder Energieverteilungssystems (10) mit einem als Funktionalität des Umrichters (12) implementierten Webserver (14) und einem ebenfalls als Funktionalität des Umrichters (12) implementierten Webclient (30) und ein Verfahren zu dessen Betrieb, wobei mittels des Webservers (14) Daten jeweils einer Anzeigeseite (18) an den Webclient (30) übermittelbar sind bzw. übermittelt werden und daraus mittels des Webclients (30) eine an die Anzeigeeinheit (20) übermittelbare und in einen dortigen Bildpuffer (26) ladbare Datenmenge generierbar ist bzw. generiert wird und wobei der Inhalt des Bildpuffers (26) mittels der Anzeigeeinheit (20) darstellbar ist bzw. dargestellt wird.

## Beschreibung

Die hier vorgeschlagene Neuerung betrifft einen in der Fachterminologie oftmals auch als Converter bezeichneten Umrichter eines Antriebs- oder Energieverteilungssystems, nämlich ein Umrichtergerät, eine Umrichtervorrichtung - im Folgenden zusammenfassend als Umrichter bezeichnet -, sowie den Wunsch, vielfach die Notwendigkeit, Daten des zum Beispiel im Falle eines Antriebssystems als Antriebssteuerung des Antriebssystems fungierenden Umrichters während des Betriebs zur Ablesung verfügbar zu machen.

Herkömmlich erfolgt zu diesem Zweck eine Integration einer Anzeigeeinheit in den Umrichter. Integration meint dabei einerseits einen oftmals festen Einbau, andererseits aber auch eine proprietäre Anbindung an die jeweilige Funktionalität des Umrichters, also zum Beispiel eine Festverdrahtung und/oder eine Aufnahme der Software zur Ansteuerung der Anzeigeeinheit in das Laufzeitsystem des Umrichters und schließlich und vor allem auch eine Kodierung von mittels der Anzeigeeinheit darzustellenden Anzeigeseiten als Bestandteil des Laufzeitsystems.

Aus der DE 200 21 357 U ist eine Antriebssteuerung (Umrichter) mit einer Bedienkonsole bekannt. Die Antriebssteuerung und die Bedienkonsole umfassen jeweils einen Datenübertragungsanschluss und sind darüber kommunikativ verbunden. Antriebssteuerung und Bedienkonsole sind jeweils proprietär für die kommunikative Verbindung miteinander und zur Bedienung der Antriebssteuerung mittels der Bedienkonsole sowie zur Anzeige bestimmter Daten der Antriebssteuerung mittels der Bedienkonsole ausgeführt.

Bekannt ist des Weiteren die Verwendung einer Webserver-Webclient-Kombination. Dabei umfasst die Funktionalität des Umrichters eine Implementation eines Webservers und dieser ist in grundsätzlich an sich bekannter Art und Weise über eine Datenleitung und ein definiertes Protokoll für einen externen, also vom Umrichter räumlich entfernten Webclient erreichbar. Der Webclient läuft zum Beispiel auf einem Laptop, einem Tablet oder einem Smartphone - im Folgenden zusammenfassend als Webclient-Hardware bezeichnet. Der Webserver hat Zugriff auf einen Seitenspeicher und dort hinterlegte, in einer Auszeichnungssprache kodierte Anzeigeseiten. Mittels des Webclients ist jeweils eine dieser Anzeigeseiten auswählbar und deren Anzeige erfolgt mit Mitteln der jeweiligen Webclient-Hardware.

Eine Aufgabe der hier vorgeschlagenen Neuerung besteht darin, eine einfache und effiziente Möglichkeit zum Anschluss einer Anzeigeeinheit an einen Umrichter eines Antriebssystems oder eines Energieverteilungssystems zu schaffen.

Diese Aufgabe wird erfindungsgemäß mittels eines Umrichters (Umrichtergerät, Umrichtervorrichtung) eines Antriebssystems oder eines Energieverteilungssystems (oder eines Umrichters für ein Antriebs- oder Energieverteilungssystem) mit den Merkmalen des Anspruchs 1 gelöst. Umrichter sind an sich bekannt. In einem Antriebssystem dient ein Umrichter beispielsweise der Ansteuerung eines Elektromotors, welcher wiederum als Antrieb einer grundsätzlich beliebigen Maschine fungieren kann. In einem Energieverteilungssystem dient ein Umrichter der Energieumrichtung/Energiewandlung.

Der Umrichter umfasst nach dem hier vorgeschlagenen Ansatz als Funktionalität des Umrichters eine Implementation eines Webservers sowie eine Implementation eines Webclients (Webbrowser); die Begriffe Webclient und Webbrowser werden synonym verwendet und sind austauschbar. Der Webserver hat Zugriff auf einen Seitenspeicher mit in einer Auszeichnungssprache, insbesondere HTML oder dergleichen, kodierten Anzeigeseiten. Der Webserver ist innerhalb des Umrichters kommunikativ mit dem Webclient verbunden. Der Webclient ist innerhalb des Umrichters kommunikativ mit einer Anzeigeeinheit verbunden.

Mittels des Webservers sind Daten jeweils einer Anzeigeseite an den Webclient übermittelbar und daraus sind mittels des Webclients eine an die Anzeigeeinheit übermittelbare und in einen dortigen Bildpuffer ladbare Bilddaten generierbar. Die Daten der Anzeigeseite sind dabei die von der Kodierung der Anzeigeseite in der jeweiligen Auszeichnungssprache selbst umfassten Daten und darüber hinaus dort ggf. im Rahmen der Kodierung der Anzeigeseite spezifizierte Anzeigewerte, zum Beispiel Betriebsdaten wie Drehzahl, Drehmoment oder dergleichen. Der Inhalt des Bildpuffers ist schließlich mittels der Anzeigeeinheit darstellbar.

Im Ergebnis erfolgt damit die Darstellung der im Rahmen der Kodierung der jeweiligen Anzeigeseite, bevorzugt einer Kodierung in einer üblichen, maschinenlesbaren Auszeichnungssprache, zum Beispiel HTML, festgelegten Inhalte mittels der Anzeigeeinheit. Die Aufbereitung der Daten für eine solche Darstellung mittels des Umrichters und der davon umfassten Funktionalitäten (Webserver, Webclient) umfasst den Abruf jeweils einer Anzeigeseite durch den Webserver und deren Übermittlung an den Webclient, wobei der Webclient anhand der so erhaltenen Daten eine Datenmenge, nämlich Bilddaten, erzeugt, die in einen als Bildpuffer fungierenden Speicher der Anzeigeeinheit geladen wird und schließlich dort dargestellt wird, so dass ein Verwender des Umrichters mittels der Anzeigeeinheit Kenntnis von Betriebsdaten und dergleichen des Umrichters und/oder des jeweiligen Antriebssystems nehmen kann.

Die Besonderheit des hier vorgeschlagenen Ansatzes besteht darin, dass der Umrichter selbst jeweils eine Implementation eines Webservers sowie eines Webclients umfasst, also vor allem darin, dass der Umrichter zusätzlich zu einer Implementation eines Webservers auch eine Implementation eines Webclients, jeweils in Form einer Softwareapplikation/eines Computerprogramms oder einer Teilfunktionalität einer Softwareapplikation/eines Computerprogramms, umfasst.

Die hier vorgeschlagene Neuerung ist ebenso ein Verfahren zum Betrieb eines Umrichters eines Antriebssystems oder eines Energieverteilungssystems oder ein Verfahren zum Betrieb eines einen Umrichter umfassenden Antriebs- oder Energieverteilungssystems, wobei der Umrichter einen als Funktionalität des Umrichters implementierten Webserver sowie einen ebenfalls als Funktionalität des Umrichters implementierten Webclient umfasst. Der Webserver hat Zugriff auf einen Seitenspeicher mit in einer Auszeichnungssprache, insbesondere HTML oder dergleichen, kodierten Anzeigeseiten. Der Webserver und der Webclient sind innerhalb des Umrichters kommunikativ miteinander verbunden und der Webclient ist - ebenfalls innerhalb des Umrichters - kommunikativ mit einer Anzeigeeinheit verbunden.

Im Rahmen einer Ausführung des Verfahrens erhält der Webclient vom Webserver Daten jeweils einer Anzeigeseite und der Webclient erzeugt daraus eine an die Anzeigeeinheit übermittelbare und in einen dortigen Bildpuffer ladbare Bilddaten, welche schließlich als Inhalt des Bildpuffers mittels der Anzeigeeinheit dargestellt werden.

Allgemein und zur Vermeidung unnötiger Wiederholungen gelten Merkmale und Details, die im Zusammenhang mit dem Umrichter oder im Zusammenhang mit dem Verfahren zum Betrieb des Umrichters sowie jeweils eventueller Ausgestaltungen beschrieben sind, selbstverständlich auch im Zusammenhang mit und im Hinblick auf den Umrichter bzw. das Verfahren zum Betrieb des Umrichters und jeweils umgekehrt, so dass bezüglich der Offenbarung zu den Vorrichtungs- oder Verfahrensaspekten der vorgeschlagenen Neuerung stets wechselseitig Bezug genommen wird bzw. werden kann.

Dementsprechend kann das Verfahren zum Betrieb des Umrichters auch mittels einzelner oder mehrerer Verfahrensmerkmale fortgebildet sein, die sich auf Verfahrensschritte beziehen, die mittels des Umrichters oder von dem Umrichter umfasster Funktionalitäten ausführbar sind und beim Betrieb ausgeführt werden, und der Umrichter kann entsprechend auch durch Mittel zur Ausführung von im Rahmen des Verfahrens ausgeführten Verfahrensschritten fortgebildet sein.

Der Vorteil der vorgeschlagenen Neuerung besteht darin, dass ein üblicherweise von einem Umrichter ohnehin umfasster Webserver auch als Basis für eine Darstellung von Informationen mittels der Anzeigeeinheit verwendet werden kann. In diesem Zusammenhang ergibt sich als weiterer Vorteil, dass für die Zugriffskontrolle und sonstige Sicherheitsmechanismen bei einer Verwendung der Anzeigeeinheit als Mittel zur Darstellung von Informationen des Umrichters und/oder des Antriebs- oder Energieverteilungssystems dieselben Methoden verwendet werden können wie bei einem Anschluss eines externen Geräts (Laptop, Tablet, Smartphone und dergleichen) mit einem dortigen externen Webclient. Darüber hinaus werden Kosten vermieden, die ansonsten durch das Hinzufügen von dedizierten Bedienfeldern (als Anzeigeeinheit) entstehen würden. Schließlich ergibt sich als Vorteil auch, dass bei einem Webserver und einem Webclient, die beide auf dem Umrichter implementiert sind, stets im Zusammenhang eine eventuelle Aktualisierung erfolgen kann, so dass Webserver und Webclient stets zumindest kompatibel sind und beide auf einfache Art und Weise auf aktuellem Stand gehalten werden können.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens / der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Vorteilhaft ist vorgesehen, dass der Webclient in ein Laufzeitsystem des Umrichters eingebunden ist und mittels des Laufzeitsystems aktivierbar ist. Dies sorgt dafür, dass bei einer Verwendung der Anzeigeeinheit zur Darstellung von Informationen des Umrichters und/oder des Antriebs- oder Energieverteilungssystems eine ausreichend schnelle Aktualisierung der jeweiligen Darstellung an der Anzeigeeinheit erfolgt.

Weiter vorteilhaft ist gegenüber einer bisher beschriebenen Möglichkeit zur Darstellung genau einer Anzeigeseite mittels der Anzeigeeinheit auch die Auswahl einer (anderen) Anzeigeseite zur Darstellung mittels der Anzeigeeinheit möglich. Dazu ist im Rahmen des Verfahrens vorgesehen, dass zur Auswahl einer Anzeigeseite zur Darstellung mittels der Anzeigeeinheit eine Bedienhandlung an der Anzeigeeinheit vorgenommen wird. Aufgrund der Bedienhandlung an der Anzeigeeinheit resultiert eine Änderung eines Inhalts eines Registers, das im Rahmen des Verfahrens ausgewertet wird. Insofern wird der Registerinhalt an den Webclient übermittelt und der Webclient sendet in Abhängigkeit vom Registerinhalt eine Anforderung genau einer Anzeigeseite an den Webserver, welcher daraufhin die Daten der jeweiligen Anzeigeseite an den Webclient übermittelt. Nach dem Erhalt der Daten der jeweiligen Anzeigeseite erfolgt die weitere Verarbeitung dieser Daten und deren Aufbereitung zur Übermittlung in den Bildpuffer der Anzeigeeinheit wie bereits beschrieben.

Das hier vorgeschlagene Verfahren zum Betrieb eines Umrichters eines Antriebssystems oder eines Energieverteilungssystems wie hier und im Folgenden beschrieben ist zur automatischen Ausführung bevorzugt in Form zumindest eines Computerprogramms realisiert (das oder jedes Computerprogramm ist eine Implementierung des gegenständlichen Verfahrens). Die hier vorgeschlagene Neuerung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Umrichter, in dessen Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder jeweils eines Computerprogramms oder unter Kontrolle des oder des jeweiligen Computerprogramms erfolgen.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von den Begriffen Software oder Computerprogramm auch andere Implementationsmöglichkeiten, nämlich insbesondere eine Implementation in Firmware oder in Firm- und Software oder in Firm- und Hardware, umfasst sind.

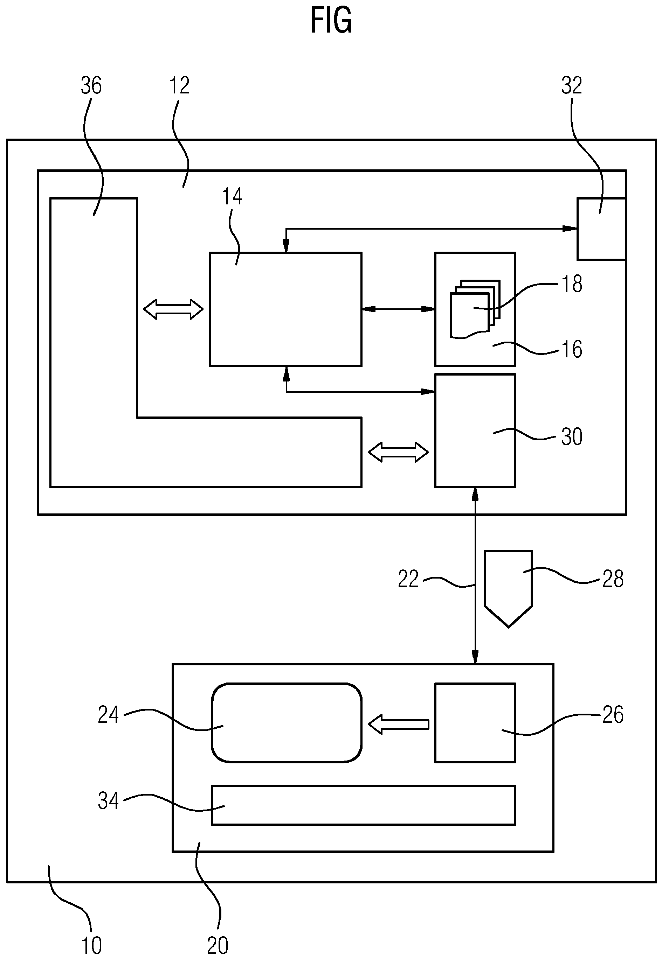

Nachfolgend wird ein Ausführungsbeispiel der vorgeschlagenen Neuerung anhand der Zeichnung näher erläutert. Das Ausführungsbeispiel ist gleichwohl nicht als Einschränkung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigt
die einzige FIGUR einen Umrichter eines Antriebs- oder eines Energieverteilungssystems, wobei in einen Speicher des Umrichters ein Webserver und ein Webclient geladen sind, wobei der Umrichter eine Anzeigeeinheit umfasst und wobei mittels der Anzeigeeinheit darstellbare Informationen mittelbar vom Webserver stammen und mittels des Webclients für eine Darstellung mittels der Anzeigeeinheit verarbeitet und aufbereitet werden.

Die FIGUR zeigt in schematisch vereinfachter Form ein Antriebs- oder Energieverteilungssystem 10, welches im Falle eines Antriebssystems zum Beispiel einen Elektromotor (nicht gezeigt) umfasst, und einen davon umfassten Umrichter 12 (Umrichtergerät, Umrichtervorrichtung). Der Umrichter 12 umfasst (nicht gezeigt) in an sich bekannter Art und Weise eine Verarbeitungseinheit in Form von oder nach Art eines Mikroprozessors sowie einen Speicher.

Zur Funktionalität des Umrichters 12 gehört die Funktionalität eines Webservers 14 (in den Speicher des Umrichters 12 ist eine Implementation eines Webservers 14 geladen). In einen im Folgenden als Seitenspeicher 16 bezeichneten Bereich des Speichers ist zumindest eine Beschreibung einer Anzeigeseite 18 in einer Auszeichnungssprache, zum Beispiel einem HTML-Code oder dergleichen, geladen. Der Webserver 14 hat auf diesen Seitenspeicher 16 Zugriff.

Zur Darstellung einer Anzeigeseite 18 ist eine Anzeigeeinheit 20 (im Sprachgebrauch der Anmelderin als Panel bezeichnet) vorgesehen. Die Anzeigeeinheit 20 ist am Antriebs- oder Energieverteilungssystem 10 oder deren Umrichter 12 angebracht, bevorzugt mit dem Umrichter 12 durch einen entsprechenden Einbau fest verbunden. Drüber hinaus ist die Anzeigeeinheit 20 mit dem Umrichter 12 kommunikativ mittels einer Datenleitung 22 verbunden. Die kommunikative Verbindung mittels der Datenleitung 22 erlaubt zum Beispiel eine serielle Datenübertragung.

Die Anzeigeeinheit 20 umfasst (nicht gezeigt) in an sich bekannter Art und Weise einen sogenannten Video Display Controller und ein Display 24, zum Beispiel ein LCD-Display, ein TFT-Display, ein OLED-Display usw. zum Beispiel in Formaten wie 1,4", 2,4" oder dergleichen. Der Video Display Controller verarbeitet in an sich bekannter Art und Weise den Inhalt eines als Bildpuffer 26 (FrameBuffer) fungierenden Speicherbereichs und bewirkt die Darstellung des Inhalts des Bildpuffers 26 mittels des Displays 24.

Die Anzeigeeinheit 20 erhält die jeweils anzuzeigenden Informationen vom Umrichter 12. Die anzuzeigenden Informationen werden mittels einer im Folgenden als lokaler Webclient 30 oder kurz nur als Webclient (Webbrowser) 30 bezeichneten Funktionalität erzeugt. Insoweit gehört zur Funktionalität des Umrichters 12 auch die Funktionalität dieses Webclients 30 (in den Speicher des Umrichters 12 ist eine Implementation eines Webclients 30 geladen). Der Webserver 14 ist innerhalb des Umrichters 12 mit dem Webclient 30 in grundsätzlich an sich bekannter Art und Weise kommunikativ verbunden und eine Kommunikation zwischen Webserver 14 und Webclient 30 erfolgt zum Beispiel auf Basis eines üblichen Protokolls, zum Beispiel HTTP oder HTTPS. Der Webserver 14 ist darüber hinaus auch mittels einer entsprechenden Schnittstelle 32 für einen externen Webclient (nicht gezeigt), beispielsweise einen Webclient auf einem Laptop, einem Tablet oder einem Smartphone, erreichbar.

Der Webclient 30 erzeugt die anzuzeigenden Informationen in einer für die Anzeigeeinheit 20 geeigneten Form, also in einer in den Bildpuffer 26 der Anzeigeeinheit 20 ladbaren Form. Dafür erhält der Webclient 30 entsprechende Daten vom Webserver 14. Bei den vom Webserver 14 erhaltenen Daten handelt es sich um die Daten jeweils einer Anzeigeseite 18 aus dem Seitenspeicher 16. Zu den Daten einer Anzeigeseite 18 gehören dabei bei der Kodierung der Anzeigeseite 18 fest hinterlegte Daten, zum Beispiel Texte, sowie Positionen und/oder Formatierungen von Texten und Anzeigewerten, vor allem aber auch Momentanwerte von im Rahmen der Kodierung der Anzeigeseite 18 spezifizierten Anzeigewerten, darunter insbesondere Betriebsdaten des Antriebs- oder Energieverteilungssystems 10, zum Beispiel Drehzahl und Stromaufnahme im Falle eines Antriebssystems oder allgemein Systemzustände. Zzu den Systemzuständen gehören zum Beispiel auch Fehler, und so weiter.

Der Webclient 30 interpretiert - kurz gefasst und in grundsätzlich an sich bekannter Art und Weise - die Daten der jeweils erhaltenen Anzeigeseite 18, interpretiert also die jeweilige Auszeichnungssprache (insbesondere HTML), und erzeugt dabei in den Bildpuffer 26 der Anzeigeeinheit 20 ladbare Bilddaten 28. Diese werden entweder im Rahmen von deren Erzeugung oder im Anschluss an deren Erzeugung über die Datenleitung 22 an die Anzeigeeinheit 20 übertragen und dabei in den dortigen Bildpuffer 26 geladen. Der Video Display Controller der Anzeigeeinheit 20 sorgt schließlich für die Darstellung der so erhaltenen Bilddaten 28, also letztlich für die Darstellung der ursprünglich vom Webserver 14 erhaltenen Anzeigeseite 18 mittels der Anzeigeeinheit 20.

Bei einer vorteilhaften Ausführungsform des Verfahren zum Anzeigen einer Anzeigeseite 18 mittels der Anzeigeeinheit 20 ist vorgesehen, dass der Webserver 14 zyklisch alle im Seitenspeicher 16 vorhandenen Anzeigeseiten 18 oder alternativ alle für eine zyklische Anzeige mittels einer entsprechenden Markierung (flag) ausgewählten Anzeigeseiten 18 aufruft. Im Rahmen eines solchen zyklischen Aufrufs ruft der Webserver 14 zum Beispiel nach Verstreichen einer vorgegebenen oder vorgebbaren Zeitspanne, zum Beispiel alle dreißig Sekunden, die jeweils nächste Anzeigeseite 18 auf und übermittelt deren Daten an den Webclient 30. Die weitere Verarbeitung dieser Daten bis zur Anzeige einer einzelnen Anzeigeseite 18 mittels der Anzeigeeinheit 20 erfolgt wie bereits beschrieben. Diese Ausführungsform hat den Vorteil, dass einem Bediener durch die zyklische Darstellung der Anzeigeseiten 18 nach und nach eine Vielzahl wesentlicher Informationen angezeigt wird. Ein weiterer Vorteil besteht darin, dass dafür auf Seiten der Anzeigeeinheit 20 keine Möglichkeit zur Vornahme von Bedienhandlungen notwendig ist, so dass sich die Funktionalität der Anzeigeeinheit 20 auf eine reine Anzeige beschränken kann und dementsprechend kostengünstige Module als Anzeigeeinheit 20 Verwendung finden können.

Zur gezielten Auswahl einer Anzeige einer anderen Anzeigeseite 18 mittels der Anzeigeeinheit 20 weist die Anzeigeeinheit 20 eine Eingabemöglichkeit zum Beispiel in Form einer Tastatur mit einer Mehrzahl von Tasten oder in Form eines Touchscreens oder dergleichen auf. Jedenfalls kann ein Bediener an der Anzeigeeinheit 20 mittels der Eingabemöglichkeit Bedienhandlungen vornehmen und aus einer Mehrzahl von Anzeigeseiten 18 genau eine Anzeigeseite 18 zur Anzeige mittels der Anzeigeeinheit 20 auswählen.

Die jeweilige Bedienhandlung des Bedieners zur Auswahl einer Anzeigeseite 18 schlägt sich im Inhalt eines Registers 34 nieder. Dessen Inhalt wird über die Datenleitung 22 an den Umrichter 12 und dort den Webclient 30 übertragen. Der Webclient 30 wertet diesen aus und sendet - genauso wie bei einem "herkömmlichen" Webclient im Falle einer Aktivierung eines Links - eine Anforderung einer durch den Inhalt jeweils kodierten Anzeigeseite 18 an den Webserver 14. D. h. der Webclient 30 führt dort hinterlegten Code aus, mittels dessen bei einem bestimmten Registerinhalt eine Anforderung einer bestimmten Anzeigeseite 18 an den Webserver 14 gesandt wird. Zur Verknüpfung des Registerinhalts mit jeweils einer Anzeigeseite 18 führt der Webclient 30 zum Beispiel einen Code aus, der in einem Pseudocode wie folgt geschrieben werden kann:

```
     WENN Bit 1 des REGISTERS gesetzt ist,
          DANN Aufruf Anzeigeseitel;
     WENN Bit 2 des REGISTERS gesetzt ist,
          DANN Aufruf Anzeigeseite2;
     usw.
```

Über eine gezielte Auswahl einer einzelnen Anzeigeseite 18 zur Darstellung mittels der Anzeigeeinheit 20 mittels einer Bedienhandlung an der Anzeigeeinheit 20 hinaus gibt es - zumindest im Rahmen einer vorteilhaften Ausführungsform - noch eine weitere Möglichkeit für eine Anzeige einer jeweiligen Anzeigeseite 18 mittels der Anzeigeeinheit 20: Im Falle eines Fehlers, zum Beispiel eines mittels eines Laufzeitsystems 36 des Umrichters 12 automatisch erkannten Fehlers, erhält der Webserver 14 ein entsprechendes Signal, zum Beispiel ein vom Laufzeitsystem 36 generiertes Signal, und wählt eine zu dem Fehlerfall passende Anzeigeseite 18, nämlich eine zu dem den Fehlerfall kodierenden Signal passende Anzeigeseite 18, aus und übermittelt deren Daten an den Webclient 30. Die weitere Verarbeitung dieser Daten bis zur Anzeige der Anzeigeseite 18 mittels der Anzeigeeinheit 20 erfolgt wie bereits beschrieben. Eine Verknüpfung eines einen jeweiligen Fehlerfall kodierenden Signals mit einer dann anzuzeigenden Anzeigeseite 18 kann zum Beispiel in Form einer Lookup-Tabelle (LUT) erfolgen, wobei diese zur Referenzierung einer jeweiligen Anzeigeseite 18 zum Beispiel eine Nummer (Seitennummer) oder sonstige Ordnungszahl oder dergleichen oder eine Adresse der jeweiligen Anzeigeseite 18 im Seitenspeicher 16 umfasst.

Zur Ausführung der beschriebenen Funktionen umfasst der Webclient 30 zum Beispiel eine Implementation eines http-Clients, jedenfalls eine Implementation einer Funktionalität zur Interpretation der jeweiligen Auszeichnungssprache. Darüber hinaus umfasst der Webclient 30 zur Ausführung der beschriebenen Funktionen einen HTML-Parser, ein Skript-Interpreter und zum Beispiel zumindest eine sogenannte GUI-Bibliothek, insbesondere eine Graphik-Bibliothek - zum Beispiel liteHTML (als HTML-Parser), liteJS (als Skript-Interpreter) und µGFX (als Graphik-Bibliothek). Schließlich umfassen der Webclient 30 und die Anzeigeeinheit 20 zur Ausführung der beschriebenen Funktionen jeweils zum Beispiel einen Treiber zur Abwicklung der Datenübertragung über die Datenleitung 22.

Der Webclient 30 ist als Bestandteil der Funktionalität des Umrichters 12 bevorzugt in ein Laufzeitsystem 36 des Umrichters 12 eingebunden. D.h. der Webclient 30 wird durch das Laufzeitsystem 36, insbesondere ein Echtzeitsystem, regelmäßig aktiviert, so dass die beschriebenen Funktionen ablaufen können und schließlich ohne einen für einen Bediener merklichen Zeitverzug eine Darstellung einer jeweiligen Anzeigeseite 18 mittels der Anzeigeeinheit 20 erfolgt. Der Webclient 30 ist dafür zum Beispiel in Form einer mittels des Laufzeitsystems 36 aktivierbaren und regelmäßig, insbesondere zu vorgegebenen oder vorgebbaren äquidistanten Zeitpunkten, aufrufbaren Task implementiert oder wird mittels einer solchen Task aufgerufen. Dasselbe gilt bevorzugt für den Webserver 14 entsprechend.

Mittels der Anzeigeeinheit 20 und einer dort zum Beispiel mittels einzelner Tasten, Bedienfelder oder dergleichen geschaffenen Bedienmöglichkeit besteht im Falle eines Umrichters 12 für ein Antriebssystem 10 mittels entsprechender Bedienhandlungen die Möglichkeit, in einem sogenannten Manual Mode zumindest eine Achse, ausgewählte oder auswählbare Achsen oder sämtliche Achsen des jeweiligen Antriebssystems 10 manuell zu verfahren. Im Falle einer solchen manuellen Bedienung wird bevorzugt eine jeweilige Achsposition angezeigt, nämlich im Wege einer Darstellung einer entsprechenden Anzeigeseite 18 (Darstellung wie oben beschrieben) mittels der Anzeigeeinheit 20. Dabei erfolgt besonders bevorzugt eine Auswahl einer entsprechenden Anzeigeseite 18 automatisch aufgrund der jeweiligen Bedienhandlung an der Anzeigeeinheit 20.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Vorgeschlagen werden ein Umrichter 12 eines Antriebs- oder Energieverteilungssystems 10 und ein Verfahren zu dessen Betrieb. Der Umrichter 12 umfasst einen als Funktionalität des Umrichters 12 implementierten Webserver 14 und einen ebenfalls als Funktionalität des Umrichters 12 implementierten Webclient 30. Webserver 14 und Webclient 30 sind jeweils in Software implementiert, sind in einen vom Umrichter 12 umfassten Speicher geladen und werden im Betrieb mittels zumindest einer vom Umrichter 12 umfassten Verarbeitungseinheit in Form von oder nach Art eines Mikroprozessors ausgeführt.

Mittels des Webservers 14 sind Daten jeweils einer Anzeigeseite 18 an den Webclient 30 übermittelbar bzw. werden beim Betrieb mittels des Webservers 14 an den Webclient 30 übermittelt. Mittels des Webclients 30 ist daraus eine an die Anzeigeeinheit 20 übermittelbare und in einen dortigen Bildpuffer 26 ladbare Datenmenge (Bilddaten 28) generierbar bzw. wird beim Betrieb eine solche Datenmenge generiert und in den Bildpuffer 26 der Anzeigeeinheit 20 übertragen. Der Inhalt des Bildpuffers 26 ist schließlich mittels der Anzeigeeinheit 20 darstellbar und wird beim Betrieb mittels der Anzeigeeinheit 20 dargestellt.

Im Falle einer zumindest gedanklichen Unterscheidung zwischen einem Umrichter 12 einerseits und einer von dem Umrichter 12 umfassten, für sich genommen grundsätzlich an sich bekannten Steuereinheit mit einem Speicher und einer Verarbeitungseinheit anderseits rechtfertigt sich die Formulierung, dass die Steuereinheit die Implementation des Webservers 14 und des Webclients 30 umfasst. Diese sind dann in den Speicher der Steuereinheit geladen und innerhalb der Steuereinheit kommunikativ verbunden.

## Patentansprüche

1. Umrichter (12) eines Antriebs- oder Energieverteilungssystems (10) mit einem als Funktionalität des Umrichters (12) implementierten Webserver (14) und einem ebenfalls als Funktionalität des Umrichters (12) implementierten Webclient (30),
wobei der Webserver (14) Zugriff auf einen Seitenspeicher (16) mit Anzeigeseiten (18) hat,
wobei der Webserver (14) kommunikativ mit dem Webclient (30) verbunden ist,
wobei der Webclient (30) kommunikativ mit einer Anzeigeeinheit (20) verbunden ist,
wobei mittels des Webservers (14) Daten jeweils einer Anzeigeseite (18) an den Webclient (30) übermittelbar sind und daraus mittels des Webclients (30) an die Anzeigeeinheit (20) übermittelbare und in einen dortigen Bildpuffer (26) ladbare Bilddaten (28) generierbar sind und
wobei der Inhalt des Bildpuffers (26) mittels der Anzeigeeinheit (20) darstellbar ist.

2. Umrichter (12) nach Anspruch 1,
wobei der Webclient (30) in ein Laufzeitsystem (36) des Umrichters (12) eingebunden ist und mittels des Laufzeitsystems (36) aktivierbar ist.

3. Verfahren zum Betrieb eines Umrichters (12) eines Antriebs- oder Energieverteilungssystems (10),
insbesondere zum Betrieb eines Umrichters (12) nach einem der vorangehenden Ansprüche,
wobei der Umrichter (12) einen als Funktionalität des Umrichters (12) implementierten Webserver (14) sowie einen ebenfalls als Funktionalität des Umrichters (12) implementierten Webclient (30) umfasst,
wobei der Webserver (14) Zugriff auf einen Seitenspeicher (16) mit Anzeigeseiten (18) hat,
wobei der Webserver (14) kommunikativ mit den Webclient (30) verbunden ist,
wobei der Webclient (30) kommunikativ mit einer Anzeigeeinheit (20) verbunden ist,
wobei der Webclient (30) vom Webserver (14) Daten jeweils einer Anzeigeseite (18) erhält und der Webclient (30) daraus an die Anzeigeeinheit (20) übermittelbare und in einen dortigen Bildpuffer (26) ladbare Bilddaten (28) erzeugt und
wobei der Inhalt des Bildpuffers (26) mittels der Anzeigeeinheit (20) dargestellt wird.

4. Verfahren nach Anspruch 3,
wobei zur Auswahl einer Anzeigeseite (18) zur Darstellung mittels der Anzeigeeinheit (20) aufgrund einer Bedienhandlung an der Anzeigeeinheit (20) eine Änderung eines Inhalts eines Registers (34) resultiert,
wobei der Registerinhalt an den Webclient (30) übermittelt wird,
wobei der Webclient (30) in Abhängigkeit vom Registerinhalt eine Anforderung genau einer Anzeigeseite (18) an den Webserver (14) sendet und dieser daraufhin die Daten der jeweiligen Anzeigeseite (18) an den Webclient (30) übermittelt.

5. Computerprogramm, umfassend Befehle, die bei der Ausführung des Computerprogramms durch einen Umrichter (12) eines Antriebs- oder Energieverteilungssystems (10) diesen veranlassen, die Schritte des Verfahrens nach einem der Ansprüche 3 oder 4 auszuführen.

6. Computerlesbares Speichermedium mit elektronisch auslesbaren Steuersignalen, die bei der Ausführung durch einen Umrichter (12) eines Antriebs- oder Energieverteilungssystems (10) diesen veranlassen, die Schritte des Verfahrens nach einem der Ansprüche 3 oder 4 auszuführen.

7. System mit einem Umrichter (12) eines Antriebs- oder Energieverteilungssystems (10),
wobei der Umrichter (12) einen als Funktionalität des Umrichters (12) implementierten Webserver (14) sowie einen ebenfalls als Funktionalität des Umrichters (12) implementierten Webclient (30) umfasst,
wobei der Webclient (30) zur Ausführung eines Verfahrens nach einem der Ansprüche 3 oder 4 bestimmt und eingerichtet ist,
wobei der Webserver (14) Zugriff auf einen Seitenspeicher (16) mit Anzeigeseiten (18) hat,
wobei der Webserver (14) kommunikativ mit dem Webclient (30) und der Webclient (30) kommunikativ mit einer Anzeigeeinheit (20) verbunden ist,
wobei der Webclient (30) vom Webserver (14) Daten jeweils einer Anzeigeseite (18) erhält und der Webclient (30) daraus an die Anzeigeeinheit (20) übermittelbare und in einen dortigen Bildpuffer (26) ladbare Bilddaten (28) erzeugt,
wobei der Inhalt des Bildpuffers (26) mittels der Anzeigeeinheit (20) dargestellt wird.
